# EUROPEAN PATENT SPECIFICATION

(11) **EP 3 306 917 B1**
(45) Date of publication and mention of the grant of the patent: **18.12.2019**
(21) Application number: 16802393.5
(22) Date of filing: 14.04.2016
(51) Int. Cl.: H04N 7/173, H04N 21/61, H04L 12/28, H04N 7/10

(54) **METHOD AND DEVICE FOR SUPPRESSING NOISE INTERFERENCE**
VERFAHREN UND VORRICHTUNG ZUR UNTERDRÜCKUNG VON RAUSCHINTERFERENZEN
PROCÉDÉ ET DISPOSITIF DE SUPPRESSION DE BRUIT PERTURBATEUR

(30) Priority: 02.06.2015 CN 201510296937
(43) Date of publication of application: 11.04.2018
(73) Proprietor: ZTE Corporation, Shenzhen, Guangdong 518057 (CN)
(72) Inventor: DU, Minjia, Shenzhen Guangdong 518057 (CN)
(74) Representative: Iannone, Carlo Luigi
(86) International application number: PCT/CN2016/079320
(87) International publication number: WO 2016/192470

(56) References cited:
- CN-A- 101 237 255
- CN-A- 101 335 904
- CN-A- 102 045 551
- CN-A- 102 395 020
- US-A1- 2007 169 162
- US-A1- 2009 007 210
- US-A1- 2010 100 919
- US-A1- 2010 131 999
- US-A1- 2014 314 407

## Description

### Technical Field

The present invention relates to the field of communications, and more particularly to a method and device for suppressing noise interference.

### Background

In order to achieve tri-network integration functions of simultaneously providing multiple services such as video, voice and broadband on the same drop copper cable, various Ethernet over Cable (EoC) technologies emerge successively, wherein an EoC technology of Data Over Cable Service Interface Specifications (DOCSIS) in a Passive Optical Network (PON) is widely focused and applied.

However, if transmission of DOCSIS EoC data services and Community Antenna Television (CATV) services needs to be implemented simultaneously on a drop copper cable, it is needed to perform mixing output on a DOCSIS data service signal and a CATV signal.

In the related art, most of optical transceiver nodes of a CATV network already move down to a community or a corridor, and a main form is multi-path radio frequency output, therefore mixing of multiple paths of CATV radio frequency signals and data signals needs to be implemented. The implementation manner of mixing needs to divide a DOCSIS data signal into multiple paths of corresponding signals. In a signal return process, introduction of noise interference to any one path will affect the quality of a returned signal, and it is difficult to judge the specific path where the interference is introduced, thereby bringing a certain difficulty to suppression of the noise interference.

Any effective solution has not been proposed yet at present for the problem in the related art that noise interference is introduced in a signal return process.

The features of the preamble of the independent claims are known from US 2009/0007210 A1. Related technologies are known from US 2010/0131999 A1 and US 2010/0100919 A1.

### Summary

The present invention provides a method and device for suppressing noise interference according to appended independent claims, to at least solve the problem in the related art that noise interference is introduced in a signal return process. Further improvements and embodiments are provided in the dependent claims.

Also provided is a method for suppressing noise interference. The method includes the steps as follows.

Various attenuators are connected to various uplinks of a terminal, and a DOCSIS service processing module is connected to the attenuators.

The DOCSIS service processing module configures attenuation values of the attenuators, and sequentially determines whether noise interference exists in each of the various uplinks.

After the DOCSIS service processing module determines an uplink in which the noise interference exists, the uplink is turned off.

In the embodiment of the present invention, sequentially determining whether noise interference exists in each of the various uplinks includes the following operations.

The attenuation value of the attenuator of each of the various uplinks is sequentially set to a maximum, setting the attenuation value of an uplink to a maximum indicates that the uplink is turned off to check whether noise interference is eliminated.

If the noise interference still exists, it is indicated that the noise interference is not introduced from the uplink.

If the noise interference disappears, it is indicated that the noise interference is introduced from the uplink.

In the embodiment of the present invention, when it is indicated that the noise interference is not introduced from the uplink, the method includes the step as follows.

The attenuation value of the attenuator of the uplink is configured, and the uplink is turned on.

In the embodiment of the present invention, after the uplink in which the noise interference exists is turned off, the method includes the step as follows.

It is detected whether the noise interference in the uplink is eliminated, and when the noise interference in the uplink is eliminated, the attenuation value of the attenuator of the uplink is re-configured, and the uplink is turned on.

In the embodiment of the present invention, the various uplinks include at least one of the following: a four-path uplink, a three-path uplink, a two-path uplink and a one-path uplink.

In the embodiment of the present invention, the various attenuators are connected to a directional coupler, the directional coupler mixes low-frequency data signals into an upstream data signal US and sends the US to the DOCSIS service processing module.

Also provided is a device for suppressing noise interference. The device includes: attenuators and a Data Over Cable Service Interface Specifications (DOCSIS) service processing module.

The various attenuators are connected to various uplinks of a terminal, and the DOCSIS service processing module is connected to the attenuators.

The DOCSIS service processing module configures attenuation values of the attenuators, for sequentially determining whether noise interference exists in each of the various uplinks.

After the DOCSIS service processing module determines an uplink in which the noise interference exists, the DOCSIS service processing module turns off the uplink.

In the embodiment of the present invention, the DOCSIS service processing module sequentially sets the attenuation value of the attenuator of each of the various uplinks to a maximum, setting the attenuation value of an uplink to a maximum indicates that the uplink is turned off to check whether noise interference is eliminated.

If the noise interference still exists, it is indicated that the noise interference is not introduced from the uplink.

If the noise interference disappears, it is indicated that the noise interference is introduced from the uplink.

In the embodiment of the present invention, when it is indicated that the noise interference is not introduced from the uplink, the DOCSIS service processing module configures the attenuation value of the attenuator of the uplink, and turns on the uplink.

In the embodiment of the present invention, the DOCSIS service processing module detects whether the noise interference in the uplink is eliminated, and if the noise interference in the uplink is eliminated, the DOCSIS service processing module re-configures the attenuation value of the attenuator of the uplink, and turns on the uplink.

In the embodiment of the present invention, the various uplinks include at least one of the following: a four-path uplink, a three-path uplink, a two-path uplink and a one-path uplink.

In the embodiment of the present invention, the device further includes: a directional coupler.

The various attenuators are connected to the directional coupler, and the directional coupler mixes low-frequency data signals into an upstream data signal US and sends the US to the DOCSIS service processing module.

By the present invention, various attenuators are connected to various uplinks of a terminal, and a DOCSIS service processing module is connected to the attenuators; the DOCSIS service processing module configures attenuation values of the attenuators, and sequentially determines whether noise interference exists in each of the various uplinks; and after the DOCSIS service processing module determines an uplink in which the noise interference exists, the uplink is turned off. The problem that noise interference is introduced in a signal return process is solved, thereby suppressing noise interference in a return link.

### Brief Description of Drawings

The drawings illustrated herein are intended to provide a further understanding for the present invention, and form a part of the present application. The schematic embodiments and illustrations of the present invention are intended to explain the present invention, and do not form improper limits to the present invention. In the drawings:
FIG. 1 is a flowchart of a method for suppressing noises interference according to an embodiment of the present invention.
FIG. 2 is a schematic diagram of CATV and DOCSIS signal mixing in the related art.
FIG. 3 is a schematic diagram of a programmable noise switch circuit according to an exemplary embodiment of the present invention.

### Detailed Description

The present invention will be illustrated hereinbelow with reference to the drawings and in conjunction with the embodiments in detail. It is important to note that the embodiments in the present application and the characteristics in the embodiments may be combined under the condition of no conflicts.

It is important to note that terms "first", "second" and the like in the description and claims and the drawings of the present invention are used to distinguish similar objects, and do not need to describe a specific sequence or a precedence order.

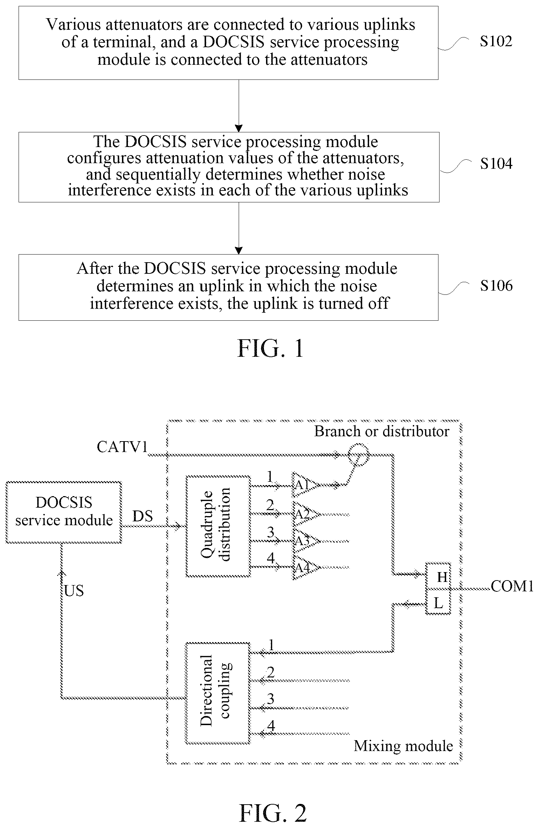

In the present embodiment, a method for suppressing noise interference is provided. FIG. 1 is a flowchart of a method for suppressing noises interference according to an embodiment of the present invention. As shown in FIG. 1, the flow includes the steps as follows.

In step S102, various attenuators are connected to various uplinks of a terminal, and a DOCSIS service processing module is connected to the attenuators.

In step S104, the DOCSIS service processing module configures attenuation values of the attenuators, and sequentially determines whether noise interference exists in each of the various uplinks.

In step S106, after the DOCSIS service processing module determines an uplink in which the noise interference exists, the uplink is turned off.

By the above-mentioned steps, various attenuators are connected to various uplinks of a terminal, and connected to a DOCSIS service processing module, and the DOCSIS service processing module configures attenuation values of the attenuators, determines whether noise interference exists in each of the various uplinks, and turns off an uplink in which the noise interference exists. The problem that noise interference is introduced in a signal return process is solved, thereby suppressing noise interference in a return link.

In the present embodiment, by setting an attenuation value of an attenuator to turn on or turn off an uplink, whether noise interference exists in each of the uplinks is sequentially determined. For example, the attenuation value of the attenuator of each of the various uplinks is sequentially set to a maximum, setting the attenuation value of an uplink to a maximum indicates that the uplink is turned off to check whether noise interference is eliminated. If the noise interference still exists, it is indicated that the noise interference is not introduced from the uplink. If the noise interference disappears, it is indicated that the noise interference is introduced from the uplink.

Herein, when it is indicated that the noise interference is not introduced from the uplink, the DOCSIS service processing module configures the attenuation value of the attenuator of the uplink, and turns on the uplink.

In the present embodiment, after the uplink in which the noise interference exists is turned off, it may also be detected whether the noise interference in the uplink is eliminated, and if the noise interference in the uplink is eliminated, the attenuation value of the attenuator of the uplink is re-configured, and the uplink is turned on.

In the present embodiment, the various uplinks include at least one of the following: a four-path uplink, a three-path uplink, a two-path uplink and a one-path uplink. The various attenuators may also be connected to a directional coupler, the directional coupler mixes low-frequency data signals into an upstream data signal US and sends the US to the DOCSIS service processing module.

In the present embodiment, a device for suppressing noise interference is also provided. The device is used to implement the above-mentioned embodiment and the exemplary implementation mode. Those which have been illustrated will not be elaborated herein. Just as used below, a term "module" may implement the combination of software and/or hardware with predetermined functions. Although the device described by the following embodiment is better implemented by software, the implementation of hardware or the combination of software and hardware may be possible and conceived.

A device for suppressing noise interference includes: attenuators and a DOCSIS service processing module.

The various attenuators are connected to various uplinks of a terminal, and the DOCSIS service processing module is connected to the attenuators.

The DOCSIS service processing module configures attenuation values of the attenuators, for sequentially determining whether noise interference exists in each of the various uplinks.

After the DOCSIS service processing module determines an uplink in which the noise interference exists, the DOCSIS service processing module turns off the uplink.

By the above-mentioned device, various attenuators are connected to various s of a terminal, and connected to a DOCSIS service processing module, and the DOCSIS service processing module configures attenuation values of the attenuators, determines whether noise interference exists in each of the various uplinks, and turns off an uplink in which the noise interference exists. The problem that noise interference is introduced in a signal return process is solved, thereby suppressing noise interference in a return link.

In the present embodiment, the DOCSIS service processing module sequentially sets the attenuation value of the attenuator of each of the various uplinks to a maximum, setting the attenuation value of an uplink to a maximum indicates that the uplink is turned off to check whether noise interference is eliminated.

If the noise interference still exists, it is indicated that the noise interference is not introduced from the uplink.

If the noise interference disappears, it is indicated that the noise interference is introduced from the uplink.

Herein, when it is indicated that the noise interference is not introduced from the uplink, the DOCSIS service processing module configures the attenuation value of the attenuator of the uplink, and turns on the uplink.

In the present embodiment, the DOCSIS service processing module detects whether the noise interference in the uplink is eliminated, and when the noise interference in the uplink is eliminated, the DOCSIS service processing module re-configures the attenuation value of the attenuator of the uplink, and turns on the uplink.

In the present embodiment, the various s include at least one of the following: a four-path uplink, a three-path uplink, a two-path uplink and a one-path uplink.

In the present embodiment, the device further includes: a directional coupler.

The various attenuators are connected to the directional coupler, and the directional coupler mixes low-frequency data signals into an upstream data signal US and sends the US to the DOCSIS service processing module.

The present invention will be illustrated hereinbelow in conjunction with exemplary embodiments and implementation modes in detail.

The exemplary embodiment designs a programmable noise switch circuit for suppressing noise interference in a data return link by using a specific mixing manner of a data signal and a CATV signal in a DOCSIS EOC.

In a DOCSIS EOC solution in the related art, there are four types for device, namely one-in-and-one-out, two-in-and-two-out, three-in-and-three-out and four-in-and-four-out. The type of four-in-and-four-out is used more frequently. That is, four paths of CATV signal enter a Cable Media Converter (CMC) simultaneously to be mixed with a data service signal, and four paths of mixing signal are output to be transmitted on a coaxial cable. The other three types are in the same fashion.

DOCSIS is a data access technology using a Frequency Division Duplexing (FDD) working mode. Uplink and downlink data work at different bands respectively, and both use a duplexing mode so as to realize two-way data transmission. The transmission band of the uplink data is 5 to 65 MHz, and the transmission band of the downlink data is 87 to 1004 MHz. A working band of a CATV signal is 87 to 870 MHz.

FIG. 2 is a schematic diagram of CATV and DOCSIS signal mixing in the related art. As shown in FIG. 2, according to the above band division, a specific mixing manner of a DOCSIS service signal and a CATV signal is as shown in FIG. 2 (the four-in-and-four-out type is taken as an example). Only a first path is drawn in FIG. 2, and second, third and fourth paths are identical to the first path in structure. In a downlink direction, a downlink data signal DS (downstream) output by a DOCSIS service module is divided into four paths via a quadruple distributor, and after passing through an amplifier, each path thereof is mixed with one path in four paths of CATV signal from an optical station. FIG. 2 only shows a diagram of mixing of one path of data service and CATV1, and the signal is output to a user home by high-pass filtering of a duplexer. In an uplink direction, four paths of signal returned by a user are input to compound (COM) ports of four duplexers respectively, low-frequency data signals are obtained by filtering with low-pass filters of the duplexers, a four-path directional coupler mixes the low-frequency signals input from the four COM ports into an uplink signal US (Upstream), and the US is sent to the DOCSIS service module.

A user return channel is an uplink direction of a data signal. Since the data signals are returned in multiple paths and then coupled by a directional coupler, the quality of a returned signal will be affected in a return process if noise interference is introduced from any one path. Moreover, since the data signals are returned in multiple paths, it is difficult to judge a specific path where the interference is introduced.

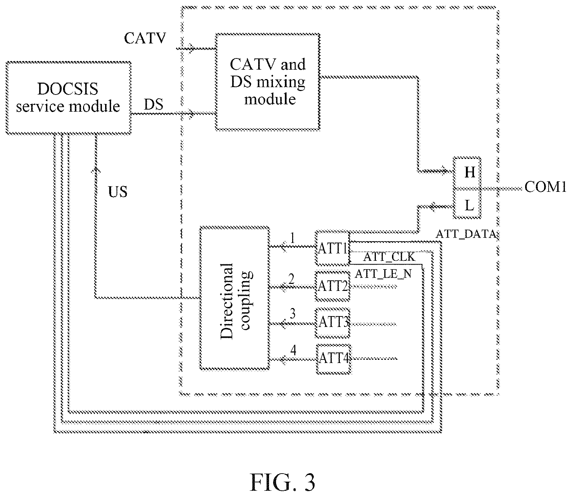

FIG. 3 is a schematic diagram of a programmable noise switch circuit according to an exemplary embodiment of the present invention. As shown in FIG. 3, in order to detect and suppress noise introduced on a return passage, an exemplary embodiment of the present invention adds programmable attenuators into four uplinks. An attenuation value of the attenuator is controllable by software, and a system may control the attenuation value of each uplink according to practical requirements. When noise is introduced from any one of the four uplinks due to various reasons, normal service processing is interfered, the software controls the attenuator to sequentially set the attenuation value of each uplink to a maximum, which is equivalent to turning off that uplink, to detect whether the interference is eliminated. If the interference still exists, it is indicated that the interference is not introduced from that uplink, the software re-configures the attenuation value of the attenuator as 0, and the uplink is turned on. If the N^{th} uplink is turned off, the interference is eliminated, it may be determined that the interference is introduced from the N^{th} uplink. After an uplink from which the interference is introduced is determined, the uplink is kept to be turned off. After the interference of that uplink is eliminated, the software controls the uplink to be attenuated to 0, and the return uplink is re-turned on.

The exemplary embodiment of the present invention is illustrated with the type of four-in-and-four-out. The principles for the types of three-in-and-three-out, two-in-and-two-out and one-in-and-one-out are the same as the principle of the type of four-in-and-four-out. A four-path directional coupler in the figure is replaced with a three-path directional coupler and a two-path directional coupler respectively. The type of one-in-and-one-out does not need a directional coupler, and only uses a direct-through mode.

In order to detect and suppress noise introduced on a return passage, the exemplary embodiment of the present invention adds programmable attenuators ATT1-ATT4 into four uplinks respectively. As shown in FIG. 3, FIG. 3 shows the situation of the first uplink, the second, third and fourth uplinks are the same as the first uplink. The attenuator ATT1 is a software programmable digital attenuator, its attenuation value may be set to be 0 to 31.5 db, with Idb as a step. An attenuator control line of the ATT is connected to a service processing module, and a system may control the attenuation value of each uplink according to practical requirements.

A specific implementation mode is that: in case of a normal service, ATT_LE_N (signal enable control signal) of four uplinks is pulled down in default, i.e., the attenuation value is 0, and a signal is directly returned to a DOCSIS service module. When noise is introduced from any one of the four uplinks due to various reasons, normal service processing is interfered, software controls the attenuator to sequentially set the attenuation values of the first to fourth uplinks to a maximum, which is equivalent to turning off that uplink, to detect whether the interference is eliminated. If the interference still exists, it is indicated that the interference is not introduced from that uplink, the software re-configures the attenuation value of the attenuator as 0, and the uplink is turned on. If the N^{th} uplink is turned off, the interference is eliminated, it may be determined that the interference is introduced from the N^{th} uplink. After an uplink from which the interference is introduced is determined, the uplink is kept to be turned off. After the interference of that uplink is eliminated, the software controls the uplink to be attenuated to 0, and the return uplink is re-turned on.

The above-mentioned exemplary embodiment of the present invention discloses a programmable noise switch circuit for suppressing noise interference in an uplink. The circuit is applied to a CMC using a PON+DOCSIS EoC technology access solution, capable of effectively judging an interfered uplink in multiple return uplinks of the CMC and reducing the interference or turning off that uplink according to practical requirements.

The CMC includes the programmable noise switch circuit for suppressing noise interference in an uplink. FIG. 3 shows a schematic diagram of a four-in-and-four-out solution. The present exemplary embodiment is applied to device types of three-in-and-three-out, two-in-and-two-out, and one-in-and-one-out. A four-path directional coupler in FIG. 3 is replaced with a three-path directional coupler and a two-path directional coupler respectively. The one-in-and-one-out does not need a directional coupler.

According to the programmable noise switch circuit for suppressing noise interference in an uplink in the CMC, in an uplink direction, four paths of signal returned by a user are input into four COM ports respectively, low-frequency data signals are obtained by filtering with low-pass filters of duplexers, a four-path directional coupler mixes the low-frequency signals input from the four COM ports into a US, and the US is sent to the DOCSIS service module.

According to the programmable noise switch circuit for suppressing noise interference in an uplink in the CMC, in an uplink direction, in order to detect and suppress noise introduced on a return passage, an exemplary embodiment of the present invention adds programmable attenuators into four uplinks respectively. An attenuation value of the attenuator is controllable by software, and a system may control the attenuation value of each uplink according to practical requirements.

According to the programmable noise switch circuit for suppressing noise interference in an uplink in the CMC, in an uplink direction, when noise is introduced from any one of the four uplinks due to various reasons, normal service processing is interfered, the software controls the attenuator to sequentially set the attenuation value of each uplink to a maximum, which is equivalent to turning off that uplink, to detect whether the interference is eliminated. If the interference still exists, it is indicated that the interference is not introduced from that uplink, the software re-configures the attenuation value of the attenuator as 0, and the uplink is turned on. If the N^{th} uplink is turned off, the interference is eliminated, it may be determined that the interference is introduced from the N^{th} uplink. After an uplink from which the interference is introduced is determined, the uplink is kept to be turned off. After the interference of that uplink is eliminated, the software controls the uplink to be attenuated to 0, and the return uplink is re-turned on.

By the description of the above-mentioned implementation mode, a person skilled in the art may clearly know that the method according to the above-mentioned embodiment may be implemented via software and a necessary general hardware platform, or may, certainly, be implemented by hardware. However, under many circumstances, the former is an exemplary implementation mode. Based on such understanding, solutions of the present invention may be substantially embodied in a form of software product, or parts contributing to the related art may be embodied in a form of software product, and a computer software product is stored in a storage medium (such as a Read-Only Memory/Random Access Memory (ROM/RAM), a magnetic disk or an optical disk), which includes a plurality of instructions to enable a terminal device (which may be a mobile phone, a computer, a server or network equipment) to execute the method according to each embodiment of the present invention.

An embodiment of the present invention also provides a storage medium. In the present embodiment, the storage medium may be set to store program codes for executing the steps of the method in the above-mentioned embodiment.

In the present embodiment, the storage medium may include, but is not limited to, various media capable of storing program codes, such as U disk, ROM, RAM, mobile hard disk, magnetic disk or optical disk.

In the present embodiment, a processor may execute the method in the above-mentioned embodiment according to program codes already stored in the storage medium.

Apparently, a person skilled in the art shall understand that all of the above-mentioned modules or steps in the present invention may be implemented by using a general calculation device, may be centralized on a single calculation device, or may be distributed on a network composed of multiple calculation devices. They may be implemented by using executable program codes of the calculation devices. Thus, they may be stored in a storage device and executed by a calculation device. Moreover, the shown or described steps may be executed in a sequence different from the sequence here under certain conditions. Or, they are manufactured into various integrated circuit modules respectively, or multiple modules or steps therein are manufactured into a single integrated circuit module. Thus, the present invention is not limited to any specific combination of hardware and software.

The above is only the exemplary embodiments of the present invention, and is not intended to limit the present invention. For a person skilled in the art, the present invention is susceptible to various modifications and changes.

### Industrial Applicability

Based on the above-mentioned solutions provided in the embodiments of the present invention, various attenuator are connected to various uplinks of a terminal, and a DOCSIS service processing module is connected to the attenuators; the DOCSIS service processing module configures attenuation values of the attenuators, and sequentially determines whether noise interference exists in each of the various uplinks; and after the DOCSIS service processing module determines an uplink in which the noise interference exists, the uplink is turned off. The problem that noise interference is introduced in a signal return process is solved, thereby suppressing noise interference in a return link.

## Claims

1. A method for suppressing noise interference, comprising:
connecting various attenuators to various uplinks of a terminal,
**characterized in that** the method further comprises:
connecting a Data Over Cable Service Interface Specifications, DOCSIS, service processing module to the attenuators (S102); connecting the various attenuators to a directional coupler, mixing, by the directional coupler, low-frequency data signals, which are returned by a user and obtained by filtering through a low-pass filter, into an upstream data signal, US, and sending the US to the DOCSIS service processing module;
configuring, by the DOCSIS service processing module, attenuation values of the attenuators, and sequentially determining whether noise interference exists in each of the various uplinks (S104); and
after the DOCSIS service processing module determines an uplink in which the noise interference exists, turning off the uplink (S106),
wherein sequentially determining whether noise interference exists in each of the various uplinks comprises:
sequentially setting the attenuation value of the attenuator of each of the various uplinks to a maximum, wherein setting the attenuation value of an uplink to a maximum indicates that the uplink is turned off to check whether noise interference is eliminated;
when the noise interference still exists, indicating that the noise interference is not introduced from the uplink; and
when the noise interference disappears, indicating that the noise interference is introduced from the uplink.

2. The method according to claim 1, wherein when it is indicated that the noise interference is not introduced from the uplink, the method comprises:
configuring the attenuation value of the attenuator of the uplink, and turning on the uplink.

3. The method according to claim 1, wherein after the uplink in which the noise interference exists is turned off, the method comprises:
detecting whether the noise interference in the uplink is eliminated, and when the noise interference in the uplink is eliminated, re-configuring the attenuation value of the attenuator of the uplink, and turning on the uplink.

4. The method according to any one of claims 1 to 3, wherein the various uplinks comprise at least one of the following: a four-path uplink, a three-path uplink, a two-path uplink and a one-path uplink.

5. A device for suppressing noise interference, comprising: various attenuators, wherein
the various attenuators are connected to various uplinks of a terminal,
**characterized in that** the device further comprises a Data Over Cable Service Interface Specifications, DOCSIS, service processing module and a directional coupler, wherein
the DOCSIS service processing module is connected to the attenuators; the various attenuators are connected to the directional coupler, and the directional coupler mixes low-frequency data signals, which are returned by a user and obtained by filtering through a low-pass filter, into an upstream data signal, US, and sends the US to the DOCSIS service processing module;
the DOCSIS service processing module configures attenuation values of the attenuators, for sequentially determining whether noise interference exists in each of the various uplinks; and
after the DOCSIS service processing module determines an uplink in which the noise interference exists, the DOCSIS service processing module turns off the uplink,
wherein
the DOCSIS service processing module sequentially sets the attenuation value of the attenuator of each of the various uplinks to a maximum, and setting the attenuation value of an uplink to a maximum indicates that the uplink is turned off to check whether noise interference is eliminated;
when the noise interference still exists, it is indicated that the noise interference is not introduced from the uplink; and
when the noise interference disappears, it is indicated that the noise interference is introduced from the uplink.

6. The device according to claim 5, wherein
when it is indicated that the noise interference is not introduced from the uplink, the DOCSIS service processing module configures the attenuation value of the attenuator of the uplink, and turns on the uplink.

7. The device according to claim 5, wherein
the DOCSIS service processing module detects whether the noise interference in the uplink is eliminated, and when the noise interference in the uplink is eliminated, the DOCSIS service processing module re-configures the attenuation value of the attenuator of the uplink, and turns on the uplink.

8. The device according to any one of claims 5 to 7, wherein the various uplinks comprise at least one of the following: a four-path uplink, a three-path uplink, a two-path uplink and a one-path uplink.

## Patentansprüche

1. Verfahren zur Unterdrückung von Rauschinterferenzen, umfassend:
Verbinden verschiedener Dämpfer mit verschiedenen Uplinks eines Endgeräts,
**dadurch gekennzeichnet, dass** das Verfahren ferner umfasst:
Verbinden eines Data Over Cable Service Interface Specifications, DOCSIS, Dienstverarbeitungsmoduls mit den Dämpfern (S102); Verbinden der verschiedenen Dämpfer mit einem Richtkoppler, durch den Richtkoppler, Mischen von Niederfrequenz-Datensignalen, die durch einen Benutzer zurückgegeben werden und durch Filtern durch ein Tiefpassfilter erhalten werden, in ein Upstream-Datensignal, US, und Senden des US an das DOCSIS-Dienstverarbeitungsmodul;
durch das DOCSIS-Dienstverarbeitungsmodul, Konfigurieren von Dämpfungswerten der Dämpfer und sequentiell Bestimmen, ob Rauschinterferenzen in jedem von den verschiedenen Uplinks vorhanden ist (S104); und
nachdem das DOCSIS-Dienstverarbeitungsmodul einen Uplink bestimmt hat, in dem die Rauschinterferenzen vorhanden sind, Ausschalten des Uplinks (S106),
wobei das sequentielle Bestimmen, ob Rauschinterferenzen in jedem von den verschiedenen Uplinks vorhanden sind, umfasst:
sequentielles Einstellen des Dämpfungswerts des Dämpfers von jedem von den verschiedenen Uplinks auf ein Maximum, wobei das Einstellen des Dämpfungswerts eines Uplinks auf ein Maximum angibt, dass der Uplink ausgeschaltet ist, um zu überprüfen, ob Rauschinterferenzen beseitigt wurden;
wenn die Rauschinterferenzen immer noch vorhanden sind, Angeben, dass die Rauschinterferenzen nicht von dem Uplink eingeführt werden; und
wenn die Rauschinterferenzen verschwinden, Angeben, dass die Rauschinterferenzen von dem Uplink eingeführt werden.

2. Verfahren nach Anspruch 1, wobei, wenn angegeben wird, dass die Rauschinterferenzen nicht von dem Uplink eingeführt werden, das Verfahren umfasst:
Konfigurieren des Dämpfungswerts des Dämpfers des Uplinks und Einschalten des Uplinks.

3. Verfahren nach Anspruch 1, wobei, nachdem der Uplink, in dem die Rauschinterferenzen vorhanden sind, ausgeschaltet wurde, das Verfahren umfasst:
Feststellen, ob die Rauschinterferenzen in dem Uplink beseitigt sind, und, wenn die Rauschinterferenzen in dem Uplink beseitigt sind, erneutes Konfigurieren des Dämpfungswerts des Dämpfers des Uplinks und Einschalten des Uplinks.

4. Verfahren nach einem der Ansprüche 1 bis 3, wobei die verschiedenen Uplinks mindestens eines von Folgendem umfassen: einen Vier-Wege-Uplink, einen Drei-Wege-Uplink, einen Zwei-Wege-Uplink und einen Ein-Weg-Uplink.

5. Vorrichtung zur Unterdrückung von Rauschinterferenzen, umfassend: verschiedene Dämpfer, wobei
die verschiedenen Dämpfer mit verschiedenen Uplinks eines Endgeräts verbunden sind,
**dadurch gekennzeichnet, dass** die Vorrichtung ferner ein Data Over Cable Service Interface Specifications, DOCSIS, Dienstverarbeitungsmodul und einen Richtkoppler umfasst, wobei
das DOCSIS-Dienstverarbeitungsmodul mit den Dämpfern verbunden ist; die verschiedenen Dämpfer mit dem Richtkoppler verbunden sind und der Richtkoppler Niederfrequenz-Datensignale, die durch einen Benutzer zurückgegeben werden und durch Filtern durch ein Tiefpassfilter erhalten werden, in ein Upstream-Datensignal, US, mischt und das US an das DOCSIS-Dienstverarbeitungsmodul sendet;
das DOCSIS-Dienstverarbeitungsmodul Dämpfungswerte der Dämpfer konfiguriert, um sequentiell zu bestimmen, ob Rauschinterferenzen in jedem von den verschiedenen Uplinks vorhanden sind; und
nachdem das DOCSIS-Dienstverarbeitungsmodul einen Uplink bestimmt hat, in dem die Rauschinterferenzen vorhanden sind, das DOCSIS-Dienstverarbeitungsmodul den Uplink ausschaltet,
wobei
das DOCSIS-Dienstverarbeitungsmodul den Dämpfungswert des Dämpfers von jedem von den verschiedenen Uplinks sequentiell auf ein Maximum einstellt, und das Einstellen des Dämpfungswerts eines Uplinks auf ein Maximum angibt, dass der Uplink ausgeschaltet ist, um zu überprüfen, ob Rauschinterferenzen beseitigt werden;
wenn die Rauschinterferenzen immer noch vorhanden sind, angegeben wird, dass die Rauschinterferenzen nicht von dem Uplink eingeführt werden; und
wenn die Rauschinterferenzen verschwinden, angegeben wird, dass die Rauschinterferenzen von dem Uplink eingeführt werden.

6. Vorrichtung nach Anspruch 5, wobei
wenn angegeben wird, dass die Rauschinterferenzen nicht von dem Uplink eingeführt werden, das DOCSIS-Dienstverarbeitungsmodul den Dämpfungswert des Dämpfers des Uplinks konfiguriert und den Uplink einschaltet.

7. Vorrichtung nach Anspruch 5, wobei
das DOCSIS-Dienstverarbeitungsmodul feststellt, ob die Rauschinterferenzen in dem Uplink beseitigt wurden, und, wenn die Rauschinterferenzen in dem Uplink beseitigt wurden, das DOCSIS-Dienstverarbeitungsmodul den Dämpfungswert des Dämpfers des Uplinks erneut konfiguriert und den Uplink einschaltet.

8. Vorrichtung nach einem der Ansprüche 5 bis 7, wobei die verschiedenen Uplinks mindestens eines von Folgendem umfassen: einen Vier-Wege-Uplink, einen Drei-Wege-Uplink, einen Zwei-Wege-Uplink und einen Ein-Weg-Uplink.

## Revendications

1. Un procédé pour supprimer un brouillage, comprenant :
le fait de connecter divers atténuateurs à diverses liaisons montantes d'un terminal,
**caractérisé en ce que** le procédé comprend en outre :
le fait de connecter un module de traitement de service DOCSIS (Data Over Cable Service Interface Spécifications) aux atténuateurs (S102) ; le fait de connecter les divers atténuateurs à un coupleur directionnel, le fait de mélanger, par le coupleur directionnel, des signaux de données basse fréquence, qui sont renvoyés par un utilisateur et obtenus par filtrage par le biais d'un filtre passe-bas, dans un signal de données amont, US, et le fait d'envoyer l'US au module de traitement de service DOCSIS ;
le fait de configurer, par le module de traitement de service DOCSIS, des valeurs d'atténuation des atténuateurs, et le fait de déterminer séquentiellement si un brouillage existe dans chacune des diverses liaisons montantes (S104) ; et
après que le module de traitement de service DOCSIS a déterminé une liaison montante dans laquelle le brouillage existe, le fait d'éteindre la liaison montante (S106),
où le fait de déterminer séquentiellement si un brouillage existe dans chacune des diverses liaisons montantes comprend :
le fait de régler séquentiellement la valeur d'atténuation de l'atténuateur de chacune des diverses liaisons montantes à un maximum, où le fait de régler la valeur d'atténuation d'une liaison montante à un maximum indique que la liaison montante est éteinte pour vérifier si un brouillage est éliminé ;
lorsque le brouillage existe toujours, le fait d'indiquer que le brouillage n'est pas introduit à partir de la liaison montante ; et
lorsque le brouillage disparaît, le fait d'indiquer que le brouillage est introduit à partir de la liaison montante.

2. Le procédé selon la revendication 1, où lorsqu'il est indiqué que le brouillage n'est pas introduit à partir de la liaison montante, le procédé comprend :
le fait de configurer la valeur d'atténuation de l'atténuateur de la liaison montante, et le fait d'allumer la liaison montante.

3. Le procédé selon la revendication 1, où après que la liaison montante dans laquelle le brouillage existe a été éteinte, le procédé comprend :
le fait de détecter si le brouillage dans la liaison montante est éliminé, et lorsque le brouillage dans la liaison montante est éliminé, le fait de reconfigurer la valeur d'atténuation de l'atténuateur de la liaison montante, et le fait d'allumer la liaison montante.

4. Le procédé selon l'une quelconque des revendications 1 à 3, où les diverses liaisons montantes comprennent au moins un des éléments suivants : une liaison montante à quatre voies, une liaison montante à trois voies, une liaison montante à deux voies et une liaison montante à une voie.

5. Un dispositif pour supprimer un brouillage, comprenant : divers atténuateurs, où
les divers atténuateurs sont connectés à diverses liaisons montantes d'un terminal,
**caractérisé en ce que** le dispositif comprend en outre un module de traitement de service DOCSIS (Data Over Cable Service Interface Spécifications) et un coupleur directionnel, où
le module de traitement de service DOCSIS est connecté aux atténuateurs ; les divers atténuateurs sont connectés au coupleur directionnel, et le coupleur directionnel mélange des signaux de données basse fréquence, qui sont renvoyés par un utilisateur et obtenus par filtrage par le biais d'un filtre passe-bas, dans un signal de données amont, US, et envoie l'US au module de traitement de service DOCSIS ;
le module de traitement de service DOCSIS configure des valeurs d'atténuation des atténuateurs, et pour déterminer séquentiellement si un brouillage existe dans chacune des diverses liaisons montantes ; et après que le module de traitement de service DOCSIS a déterminé une liaison montante dans laquelle le brouillage existe, le module de traitement de service DOCSIS éteint la liaison montante,
où
le module de traitement de service DOCSIS règle séquentiellement la valeur d'atténuation de l'atténuateur de chacune des diverses liaisons montantes à un maximum, et le fait de régler la valeur d'atténuation d'une liaison montante à un maximum indique que la liaison montante est éteinte pour vérifier si un brouillage est éliminé ;
lorsque le brouillage existe toujours, il est indiqué que le brouillage n'est pas introduit à partir de la liaison montante ; et
lorsque le brouillage disparaît, il est indiqué que le brouillage est introduit à partir de la liaison montante.

6. Le dispositif selon la revendication 5, où lorsqu'il est indiqué que le brouillage n'est pas introduit à partir de la liaison montante, le module de traitement de service DOCSIS configure la valeur d'atténuation de l'atténuateur de la liaison montante, et allume la liaison montante.

7. Le dispositif selon la revendication 5, où le module de traitement de service DOCSIS détecte si le brouillage dans la liaison montante est éliminé, et lorsque le brouillage dans la liaison montante est éliminé, le module de traitement de service DOCSIS reconfigure la valeur d'atténuation de l'atténuateur de la liaison montante, et allume la liaison montante.

8. Le dispositif selon l'une quelconque des revendications 5 à 7, où les diverses liaisons montantes comprennent au moins un des éléments suivants : une liaison montante à quatre voies, une liaison montante à trois voies, une liaison montante à deux voies et une liaison montante à une voie.
